# EUROPEAN PATENT APPLICATION

(11) **EP 3 782 473 A1**
(43) Date of publication of application: **24.02.2021**
(21) Application number: 20160454.3
(22) Date of filing: 02.03.2020
(51) Int. Cl.: A23G 1/02, A23G 1/06, A23F 5/02, A23N 15/06

(54) **FERMENTATION CHAMBER AND METHOD FOR FERMENTING COFFEA FRUIT**

(30) Priority: 23.08.2019 EP 19193425
(71) Applicant: Wirth, Roland, 04509 Schönwölkau (DE); Einenkel, Jörg, 06188 Landsberg (DE)
(72) Inventor: Wirth, Roland, 04509 Schönwölkau (DE); de Bortoli, Valdir, 56332-578 Petrolina, PE (BR)
(74) Representative: Gulde & Partner

(57) **Abstract**

The present invention relates to a fermentation chamber and a method for fermenting coffea fruit.

In particular, the present invention relates to a fermentation chamber and a method for the controlled artificial fermentation of whole coffea fruit or coffee beans.

In a method according to the invention for fermenting coffea fruit, a respiration of the coffea fruit is measured in a closed chamber containing the fruit to be fermented.

A fermentation chamber according to the invention is configured to carry out a method according to the invention for fermenting coffea fruit.

## Description

The present invention relates to a chamber and method for fermenting coffea fruit. In particular, the present invention relates to a chamber and method for the controlled artificial fermentation of whole coffea fruit or coffee beans using carbon dioxide gas.

### Prior Art

A coffee bean is a seed of the Coffea plant and the source for coffee. It is the pit inside the red or purple fruit often referred to as a cherry. Just like ordinary cherries, the coffea fruit is also a so-called stone fruit. Even though the coffee beans are not technically beans, they are referred to as such because of their resemblance to true beans. The fruits - coffee cherries or coffee berries - most commonly contain two stones with their flat sides together. The coffee beans are embedded in a mucilaginous pulp inside the pods. Raw coffee beans have an astringent, unpleasant taste and flavour, and have to be fermented, dried, and roasted to obtain the desired characteristic coffee flavour and taste. The coffee flavour is influenced by the origin of the coffee beans, the coffee cultivar, the on-the-farm fermentation and drying process, and the roasting and further processing performed by the coffee manufacturer.

Typically, coffea fruit is processed in a plurality of ways.

The first method is called wet processing. As the name suggests, this requires a lot of water. Bad and unripe coffee cherries are sorted out and the skin of the cherry as well as the pulp is removed, so that only the slime layer and a parchment cover remain on the bean. This removal takes place with the help of a special machine, the "pulper". The beans are then placed in large tanks for 12 to 36 hours, where they undergo a fermentation process, after which they are washed again to remove any remaining pulp.

The second method is called dry processing. This operation is also called "unwashed" or "natural" preparation. The coffee cherries are cleaned and then dried in the sun for two to three weeks. During the drying process, they must be constantly turned. This procedure continues until the pulp with the parchment-like skin and the silverskin can be mechanically separated from the bean. (No fermentation takes place during this process.) The beans are then cleaned and then sorted.

The third method is called semi-dry processing. Professionals refer to this as "pulped natural". So the beans are de-pulptured. This means that the pulp of the coffee cherry is removed from the coffee bean and then processed in a natural way. As a result, not the whole coffee cherry is dried, but only the de-pulped kernel. This process also does not involve fermentation.

Traditional coffee bean curing tends to result in various degrees of non-homogeneity among the dry, green coffee beans used as a principal ingredient in specialty coffee drinks and confectionery, as well as in other food, cosmetic, and medical industries. High levels of heterogeneity among dry green coffee beans can deleteriously affect processing of green coffee, by costly processes to overcome these deficiencies, and can result in a less flavourful, nutritious, and/or useful product.

### Disclosure of invention

It is thus an object of the present invention to provide an improved method for fermenting coffea fruit or coffee beans and a corresponding fermentation chamber. In particular, an easier and more controlled fermentation process is to be achieved.

These objects are achieved by a method and a fermentation chamber having the features of the independent claims.

Thus, a first aspect of the invention relates to a method for fermenting coffea fruit, in which the whole coffea fruit or coffee beans are arranged in a gas-tight chamber and during the fermentation process a respiration of the coffea fruit or coffee beans is measured.

Here coffee beans can preferably also mean coffee beans together with fruit pulp and / or the coffee beans together with a slime layer and a parchment cover.

The method according to the invention can be used on either whole coffea fruit or on the coffee beans after they have been in through a "pulper" as in the wet processing of the prior art.

By increasing the amount of CO2 to a certain level for a certain period of time, the fruit becomes stressed and begins to breathe more, causing a greater consumption of O2. The increase of this oxidation causes an acceleration in the growth of microorganisms. In this way there is a faster reaction in the transformation of yeasts into sugars. From then on, the bacteria start to oxidize and ethanol is obtained, which is converted into acetic acid and water, releasing CO2. As the CO2 level is already high, the pulp starts to break down and drain within the first 8 to 18 hours. The conversion of alcohol into lactic acid in anaerobic conditions, is stopped because you have a higher concentration of acetic acid. After a specific time due to the high content of CO2 the fruit goes into senescence. With the high temperature the bacterial activity continues under increasing conditions due to aeration when the pulp is drained, causes the walls of the cells to break down. This allows for complex chemical changes in the fruit, such as enzymatic activity, oxidation and degradation of proteins into amino acids. These chemical reactions cause the taste, aroma and colour of coffee to develop.

In contrast to the standard fermentation, wherein the fermentation process is relatively unregulated, in the fermentation process according to the invention, in particular for use in a fermentation chamber according to the invention, the respiration (breathing) of the coffea fruit or coffee beans is measured and controlled in particular by regulation of a gas concentration (CO2 / O2 / C2H4) in the fermentation room of the chamber and the temperature inside the fermentation room is measured and controlled.

The essential advantage of the present invention is that the taste and quality of the resulting coffee is improved since during the fermentation process no disturbing oxidising oxygen reaches the coffee beans, as they are still closed. Additionally the present invention efficiently reduces the bitter astringent taste of coffee. As the fermentation process is highly regulated, the quality of the fermented coffee beans according to the invention is reproducible and thus consistently good i.e. all coffea fruit that are processed using the inventive method have homogenous, uniform properties. Furthermore, the necessary fermentation time (depending on the coffea fruit initial quality and situation) can be automatically determined and calculated by a fermentation program. By taking into account the fruit respiration during the fermentation process, the consumption of gases (O2 / CO2 / C2H4) and the energy for temperature control can be controlled specifically to the needs of the coffea fruit and can thus be significantly reduced compared to the prior art. The shortened fermentation time can also increase the fermentation chamber throughput and save energy for process control. It can be understood, that the fermentation of coffee beans together with fruit pulp is still possible using the method according to the invention and it is not confined to whole coffea fruit.

Here the term fermentation is not limited to the classical definition of fermentation, but includes other foodstuff processing steps.

The term respiration is not limited to the "breathing" of living fruit during the method according to the invention, but includes all uptake and release of gases even in a "dead" fermenting state. Preferably respiration includes the uptake of oxygen and the release of carbon dioxide by the fruit.

In a preferred embodiment of the invention it is therefore provided that the fermentation of the coffea fruit is monitored and / or controlled as a function of the respiration of the fruit via the corresponding CO2, O2 and optionally C2H4 concentration and / or temperature in the chamber, in particular in a fermentation room of the chamber. This is based on the findings on the ripening and fermentation process of fruits. During the ripening process but also during the fermentation process, a gas exchange of the fruit with the environment takes place, which is referred to as respiration, i.e. breathing. Similar to fruit ripening, where ripening in the fruit is started (triggered) by the targeted addition of ethylene gas, CO2 gas is used in this process to initiate the fermentation of the coffee beans in the fruit. Due to the increased CO2 concentration in the fruit and the absorption of oxygen in the fruit, the fermentation process begins and during the fermentation process the coffea fruit shows a certain breathability in terms of oxygen absorption, CO2 and ethylene release.

The fermentation process can be monitored by measuring these gas concentrations and the temperature control in the fermentation chamber. The respiratory activity determines the ideal CO2- and O2 concentration, i.e. the measurement of the oxygen uptake per time unit and/or the CO2 output of the fruit per time unit. Based on these measurements and values, the optimum CO2 concentration between 10% and 90% by volume CO2 is adjusted at the fruit and in the chamber. Once the optimum CO2 concentration in the chamber has been reached, it is regulated to this value and the respiratory activity of the fruit is further measured and controlled. If the respiration changes considerably, e.g. the oxygen uptake of the fruit or the CO2 release, the CO2 content is significantly reduced.

The fruit is then stored in the chamber for a period of 12 hours to 72 hours and a temperature between +15°C and +40°C. Then the fermentation process is completed and the fruit can be further processed (dried).

Preferably the oxygen concentration in the chamber is kept at an optimal range of 4,0 to 20.9 Vol% during the whole fermentation process. This is done by adding fresh air to the chamber, whenever the O2 concentration leaves the optimal range. Measurements of gas concentrations are only done, when the no fresh air is being actively added, as to only measure the influence of the coffea fruit/beans on the atmosphere inside the chamber.

The present invention is therefore characterized in particular by comparison with conventional fermentation methods in that the fruit fermentation during the fermentation process, in particular in a fermentation chamber according to the invention, is controlled and monitored by suitable means for measuring the respiration and a means for evaluating the obtained measured values.

In addition, the present invention is characterized by the fact that the CO2 concentration over the entire fermentation process is considered and controlled as a fermentation parameter in a corresponding fermentation process during the process flow of the fermentation process.

This process allows the fermentation process to be controlled and the fermentation process to be slower and gentler. This results in less bitter substances and the raw coffee product is sweeter or contains more sugar. Furthermore, more coffee raw weight remains after the process, i.e. the weight loss in the fermentation process is reduced. Additionally loss of coffee beans during fermentation is reduced, i.e. the percentage of low quality coffee beans is lower than the percentage of high quality coffee beans after the method according to the invention.

It has been shown, that an uncontrolled fermentation results in irregularly fermented coffee beans and a reduced quality of the beans. This also negatively influences the taste of the products produced from the coffee beans. The measurement of the respiration according to the invention now makes it possible to selectively fumigate the fruit with carbon dioxide, which does not exceed a necessary level of carbon dioxide, so that a particularly gentle fermentation of the fruit is achieved.

In a preferred embodiment of the invention, it is therefore provided that a predetermined CO2 concentration is set in a fermentation room of the chamber, which is varied over the duration of the fermentation process. This has the advantage that the CO2 concentration does not exceed a necessary level and in particular can be adapted to the progress of the fermentation during the process, which in turn leads to gently fermented whole coffea fruit with a uniform fermentation image.

In a particularly preferred embodiment of the invention, it is additionally provided that, when fumigated with CO2, the CO2 concentration is in a range from 10 to 90 Vol%, preferably in a range from 50 to 80 Vol%.

The values given relate in particular to at least 60% filled fermentation chambers and are to be adapted correspondingly at lower utilization of the fermentation chambers. In this respect, for example, the CO2 value is to be regarded as a regulated absolute gas value in Vol%.

Advantageously, the CO2 concentration within the fermentation room of the chamber is reduced after a predetermined period of time and kept constant at the reduced level. The optimal CO2 concentration is determined based on the change of the O2 and CO2 concentration measurements as a function of time. This embodiment of the method according to the invention further optimizes the uniformity of the fruit fermentation, since the fermentation is even gentler.

With particular advantage, the fermentation process of the method according to the invention comprises a plurality of phases, which are characterized in particular by the gas concentrations and/or the temperatures in the fermentation room.

The first phase, or start phase, of the method according to the invention initially makes it possible for all the fermenting fruit arranged in the fermentation room of the chamber to be brought to a similar fermentation state initially, so that all the fruit show substantially the same starting conditions for fermentation and thus under the following same fermentation conditions form a comparable fermentation result. One measure of this is the O2-uptake and CO2-release of the fruit before fermentation. The temperature inside the chamber is set to +15 to +40 °C, more preferably to +25 to +35°C. Preferably, a significant change of the respiration of the coffea fruit (a significant change of the CO2 concentration per time unit or the O2 concentration per time unit), marks the starting point of second phase in which active fumigation with CO2 takes place. This initially increases abruptly with the onset of fermentation and steadily in the course of the fermentation progress.

Optionally, the coffea fruit are removed from fermentation chamber and pulped after the first phase of the method according to the invention and then arranged in the fermentation chamber in a pulped form, as coffee beans with a slime layer and a parchment cover, before the start of the second phase.

With particular advantage, in the second phase, only the O2 concentration is measured as a function of time and the fumigation with CO2 takes place inside the chamber. The concentration of CO2 inside the chamber increases over time, because of the constant CO2 fumigation. If the change of the O2 concentration rises above a predetermined value, the third phase is started.

In the third phase, the CO2 concentration is kept constant inside the chamber by dynamically changing the CO2 fumigation, preferably at a value of about 40 to 80 Vol%, more preferably 50 to 60 Vol%, and more preferably 55 Vol%. If no change in the O2 concentration is measured and it falls below a predetermined value, the final phase is started.

In the final phase the temperature is changed to +10 to +35°C, more preferably +15 to +25°C. The CO2 fumigation is stopped, the chamber is flushed with fresh air and the fruit are left to rest for 12 to 48h.

After the final phase the fermented coffee beans can be further processed or the fruits can be stored and later processed.

Preferably after the final stage, the coffea fruit and / or the coffee beans are dried in the fermentation chamber.

This embodiment allows an active intervention in the fermentation process and, associated therewith, an intensification or reduction of the fermentation process in the coffea fruit initiated by adjustable parameters.

While the fermentation of the coffea fruit progresses, the respiration activity of the fruit gets less and less over time. By measuring the respiration gases the fermentation process according to the invention allows the precise determination and control of the fermentation progress.

Optionally, active manipulation of the fermentation process is also enabled by other atmospheric parameters within the fermentation room of the chamber. Thus, in a further preferred embodiment of the invention, it is provided that guidance and/or control of the temperature takes place in the fermentation room of the chamber and in particular of the coffea fruit.

With particular advantage, the measurement and/or control of the aforementioned parameters is constant or at predetermined intervals. This provides, in particular, that the measured values are monitored permanently or at short intervals, and that a control only takes place, when the critical limit value (critical change of concentration) is exceeded or fallen below. Alternatively, or additionally, a control takes place, after adjustment or readjustment of individual parameters in predefined intervals or at predetermined times, which are stored in a defined method cycle. In this embodiment, depending on an initial state of the fruit and/or the quantity of coffea fruit, the method according to the invention comprises in particular several cycles which are contained in the above-described four phases and, in particular, time intervals, temperature parameters and fumigation parameters as well as limit values for gas concentrations within of the fermentation room. This embodiment enables in the broadest sense to carry out an automatable implementation of the method according to the invention.

Accordingly, one aspect of the invention relates to a process for fermenting coffea fruit, in particular whole coffea fruit, in which the fruit to be fermented are arranged in a gas-tight fermentation room and, and their fermentation progress is measured during the fermentation of the fruit, on the basis of a respiration of the fruit.

Another aspect of the invention relates to a fermentation chamber for fermenting and storing coffea fruit comprising a gas-tight fermentation room, wherein the fermentation room is adapted to carry out the method according to the invention in one of the aforementioned embodiments.

In a preferred embodiment, the fermentation chamber comprises in each case a means for measuring a CO₂ concentration, an O₂ concentration and/or a temperature (air and fruit temperature) and / or a C2H4 concentration in the fermentation room of the chamber and corresponding means for evaluating the measured values obtained. This embodiment enables to monitor the respiration which is essential for the method according to the invention and to actively control the fermentation process through the atmospheric parameters in the fermentation room.

According to the invention, the chamber comprises a fermentation room, which is designed to be gas-tight according to criteria of a so-called CA bearing technology and, as such, is closed to the outside CA gas-tight. The requirement for the gas-tightness is reached when, after generation of an under- or over-pressure of 15 mm WC (water column = 150 Pa) in the fermentation room, this pressure drops / or increases within 0.5 hours by a maximum of 5, preferably 4, in particular 3, preferably 2 mm WS (20 Pa), wherein a smaller numerical value is associated with increased tightness. The fermentation room comprises a gas-tight CA-Gate and preferably a means for regulating the supply air, the exhaust air and/or an over / under pressure of the fermentation chamber.

In a further preferred embodiment, the chamber comprises a, associated with at least one means for evaluation, means for controlling and regulating an atmosphere within the fermentation room of the chamber.

In a preferred embodiment, the chamber comprises means that allow a permanent air circulation, for example air fans. This is reinforced by an air foreclosure system at the coffea fruit boxes (boxes on a pallet) for generating pressure differences across the boxes, since then an air or gas exchange through the boxes is favoured. This is particularly useful for fermenting whole coffea fruit. For uniform fermentation, preferably only one air-rotation-direction function is installed.

If necessary, in system according to the invention, consisting of the fermentation chamber and method, fresh air can be flushed into the chamber and excess CO2 can be removed from the chamber atmosphere. If the O2 content is too low, for example, fresh air is supplied to the fermentation room in a controlled manner via a gas-tight ventilation system. Furthermore, the air circulation rate (air volume flow and fan speed) in the fermentation room dynamically adjusts to the fermentation process and airflow permeability of the coffea fruit boxes, preferably automatically. Advantageously, only one direction of rotation / air direction of the air fans over the fruit boxes is necessary and nevertheless a uniform fermentation of the fruit in the entire fermentation room is ensured.

In a preferred embodiment, the fermentation chamber according to the invention consists of a container or a refrigerated box or is arranged in such a box so that the process according to the invention is not restricted to a stationary implementation only.

Thus another aspect of the invention concerns a container/refrigerator for fermenting, storing and/or transporting coffea fruits, the container comprising or consisting of a gas-tight fermentation space in which the coffea fruit to be fermented are arranged, and a unit for monitoring and controlling respiration gases inside the fermentation space is arranged so that during transport and/or storage of the coffea fruit their respiration activity can be measured and controlled.

Preferably the chamber for fermenting, transporting and/or storing whole coffea fruit or coffee beans is limited to exclusively a chamber for fermenting whole coffea fruit or coffee beans, wherein the container comprises a gas-tight fermentation room or consists of such a space in which the coffea fruit or coffee beans to be fermented are arranged, and a unit for monitoring and controlling respiration gases in the interior of the fermentation chamber , so that during fermentation of the coffea fruit or coffee beans their respiration activity can be measured and controlled.

In particular, the fermentation chamber has the characteristics of a fermentation chamber described above for carrying out the procedure according to the invention.

The design of the fermentation chamber as a container has the advantage that the fermentation according to the invention can be combined with a transport of the coffea fruit. This offers enormous time and energy savings and is therefore economically particularly attractive. In addition, storage periods are shortened during which the coffea fruit must be kept at a certain degree of fermentation or during which uncontrolled fermentation of the fruit takes place. For the reasons already described, this leads to high-quality and taste-balanced coffee beans, which have a larger bean mass and are less bitter. Separate fermentation at the harvest site is no longer necessary, so that cost-intensive availability of space and fermentation technology is no longer necessary.

The outer shape and size of the container preferably corresponds to a container used conventionally for transporting fruit. A container is therefore defined as a basic body, in particular a regular body, with a base surface, a bottom surface and four sides.

In addition to the usual door, the container preferably has a gas-tight bulkhead wall with a special sealing construction. This is preferably a pressure hose sealing frame wall module which is inflated and held under pressure by means of gas pressure, e.g. compressed air. The increase in volume of the sealing hose caused by the introduction of air leads to the gas-tight sealing of the transitions between the bulkhead wall and the container housing. Alternatively, the bulkhead wall is sealed using film technology, whereby the wall is bonded gas-tight with a disposable film for the duration of transport or storage, for example.

The container is preferably stackable and reversible lockable.

In preferred configuration, the monitoring and control unit comprises a means for measuring a CO2 concentration, an O2 concentration and/or a temperature within the fermentation chamber and corresponding means for evaluating the measured values obtained and, optionally, a means connected to at least one means for evaluation for controlling and regulating an atmosphere within the fermentation chamber of the container. Furthermore, a system for permanent air circulation and bulkheading of the transported goods is provided; comparable to a conventional or stationary fermentation chamber as described above, where a forced air flow is achieved via a pressure difference at the coffea fruit boxes.

Another particular advantage of the container is that it has a means of regulating a temperature in the fermentation room. If necessary, the air is cooled and heated. When conventional containers and conventional fermentation techniques are used, the increased biological heat of respiration during conventional fermentation and the confined space conditions often cause the coffea fruit to overheat due to a lack of air flow and guidance, resulting in uncontrolled and uneven fermentation of the coffea fruit. An agent for regulating temperature and gas values, in particular CO2 and O2, prevents the coffea fruit from overheating and freezing.

Another advantage of this design is that the coffea fruit can be kept at a defined fermentation stage. In other words, fermentation is interrupted. The coffea fruit remain in a controlled or controllable state of fermentation. Up to now, this has not been possible for the storage or transport of coffea fruit.

The preferred form of the invention is supplemented by the provision that a means for monitoring a state of fermentation, in particular a camera/sensor for determining a degree of fermentation, is arranged inside the fermentation chamber. This is particularly advantageous during the transport of the coffea fruit, as monitoring by inspection is excluded during this period. With particular advantage, the monitoring means is connected to a monitoring centre and/or to the control means for controlling the process in order to compare a measured fermentation value with a target value and to adapt the process and/or the temperature in the event of a deviation. The process enables a controllable and reproducible equal fermentation quality. This means that, on the basis of respiration data and empirical values, temporal fermentation processes and states of fermentation can also be assumed without a camera/sensor system. For example, radio and satellite technology and planned arrival time can be used to start fermentation on the transport route to the destination. The aim is to achieve the desired degree of fermentation of the coffea fruit on arrival at the destination. The respiration data obtained also provide information on the current fermentation of the coffea fruit to be transported.

This disturbs or changes the desired CO2 and O2 concentration. Therefore, these parameters (O2 and CO2 concentration) are readjusted in the control process, preferably promptly, especially simultaneously, and fed in accordingly.

In addition, for fermenting fruit in the transport area, a source or storage facility should be available where CO2 is stored in order to achieve the desired enrichment in the container. This is preferably achieved by fluid-carrying pressure cylinders containing the corresponding gases.

Another advantage of the fermentation chamber in the container is that it has a means of regulating a pressure, in particular a pressure relief valve, through which excess container air can escape into the environment.

In a particularly preferred design, it is intended that the container should be designed as a reversibly lockable container. This enables the container to be used as a transport container on a ship, truck or freight train.

Due to their universal applicability, the use of ISO containers is particularly suitable. ISO containers are standardised large-capacity steel containers (sea *freight containers) which* enable goods to be loaded, transported, stored and unloaded quickly and easily. The relevant standards (e.g. dimensions, supports, stackability) have been adopted in a coordinated manner by the International Maritime Organisation (IMO) and are laid down in ISO 668.

When used for a truck, insulated box bodies for trucks in the sense of the invented container are preferred. An insulated box body is considerably heavier than a comparable closed tarpaulin body due to the usually double-walled GRP panelling with an insulating core of polyurethane foam and wooden or aluminium struts in between. This reduces the usual maximum payload from 25 to 24 tonnes.

In order to ensure that the useful internal width of 2.40 m for standardised transport equipment such as Euro pallets and mesh boxes is maintained, temperature-controlled superstructures may have a total width of 2.60 m and thus exceed the otherwise maximum permitted total width of 2.55 m without special approval. However, since the maximum vehicle length must not increase, conventional refrigerated trailers can only transport 33 instead of 34 Euro-pallets.

Alternatively or additionally, the container according to the invention is designed as a prefabricated component for a fermentation chamber.

In this case, containers are also understood as refrigerated truck trailers, as they are used in the truck transport trade for perishable foodstuffs. The fermentation process according to the invention can also be used therein.

Another aspect of the invention concerns the use of the invention container for fermenting, storing and/or transporting on a ship, lorry or freight train, as well as a lorry, ship or freight train comprising the container according to the invention.

The container shall preferably have access for an energy supply that can be connected to an external energy source or to the energy supply of the ship, lorry or freight train. In addition, it is advantageous if the container has a means for external data exchange.

When used on a lorry, it includes, in particular, a non-lockable arrangement of the container on the loading area of the lorry and/or a trailer for a lorry.

In summary, the inventive container offers the advantages of controlled, uniform and optimum fermentation of coffea fruit during transport, such as sea transport and land transport. The fermentation process can be started and controlled in a targeted manner using modern communication tools. In each individual container, modern tracking data exchange on origin, goods content, destination and arrival date via remote monitoring can be used to start fermentation at the ideal time so that the desired degree of fermentation of the coffea fruit is reliably achieved on arrival. The recipient and distributor can immediately commission and deliver the coffea fruits to the delivery and roasting/drying points without having to initiate another targeted fermentation process.

Using the fermentation process in accordance with the invention, considerably less cooling and heating energy is required for fermentation. This makes it technically possible to successfully carry out controlled and uniform fermentation in the spatially limited and severely restricted space of containers. The complete control over the fermentation process and the considerably lower cooling energy requirement makes this possible and is owed to the fermentation process in accordance with the invention.

CA containers have been used for some time for transport, but successful fermentation has not been possible for the reasons given.

Further preferred embodiments of the invention result from the remaining features stated in the dependent claims.

The various embodiments and aspects of the invention mentioned in this application are, unless stated otherwise in the individual case, advantageously combinable with one another. In particular, representations and descriptions of preferred embodiments and embodiments of the method are always transferable to the storage apparatus and vice versa.

### Brief description of drawings

The invention is explained in more detail below, using an example and the drawings that go with it. The figures show:

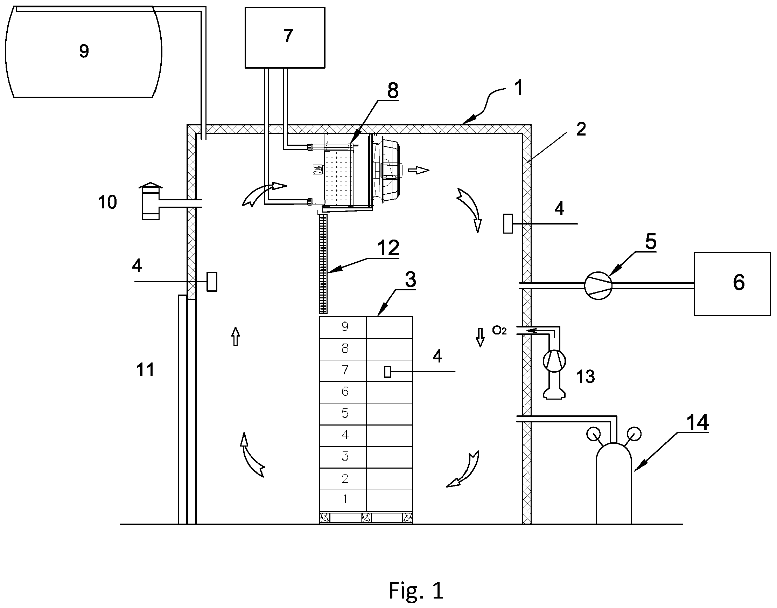

- Figure 1: is a schematic representation of a fermentation chamber according to the invention in a preferred embodiment of the invention.

### Detailed description of the invention

FIG. 1 shows a fermentation chamber 1 according to the invention comprising a fermentation room 2 for containing coffea fruit to be fermented or stored. The fermentation room 2 is designed gas-tight in the sense of a so-called CA quality, so that only a very small gas exchange takes place between the interior of the fermentation room 2 and an exterior of the chamber 1. This is ensured by the fact that the fermentation room 2 is loaded with the coffea fruit 3 via a CA-Gate 11. Only an optimal fermentation process and storage of coffea fruit with absolutely uniform and reproducible gas concentrations ensures uniformly fermented coffea fruit. This is ensured with a CA-Gate 11, which closes, for example, according to the principle of static contact force. The coffea fruit 3 are arranged for example on a so-called port palette. The room volume of a preferred fermentation room 2 is usually between 177 m³ and 266 m³, depending on the type of chamber. However, the dimensions can be adapted to a desired amount of coffea fruit 3 and structural conditions.

The pallet size, pallet quantity and amount of fermented coffea fruit may vary.
It was found that from a utilization of the fermentation room 2 of 60%, i.e. 14 filled pallets in relation to the above example, the concentration values in the method according to the invention do not need to be adapted. At a lower utilization and optionally at each utilization of the fermentation room 2 deviating from 100%, an adjustment of the monitoring and regulating parameters of the method according to the invention, for example, with the aid of a control program, can take place.

The fermentation room 2 has at least one measuring means 4, for example for temperature measurement, or is connected to a device 5 + 6 + 7, which allows a removal, or a diversion of gas located in the fermentation room 2 for the measurement of atmospheric parameters. These atmospheric parameters are for example a carbon dioxide concentration and/or an oxygen concentration. In addition, the fermentation room 2 is preferably fluidly connected to a CO2 supply 14, an oxygen supply 13, for example as a fresh air supply. These can release an amount of gas defined by the control means into the fermentation room 2 by a control means for regulating the gas atmosphere within the fermentation room 2. In order to avoid an increase in pressure in the fermentation room 2 in the case of a gas supply, for example when fresh air is supplied by the adjusting means 15 or due to CO2 fumigation, the fermentation room 2 also has a pressure flap 10 which is set up to compensate an over- or under-pressure. Alternatively, or additionally, the fermentation room 2 is fluidly connected to a so-called lung 9, in which excess gas can be released or from which gas can flow back from. Thus, certain pressure fluctuations in the fermentation room can be compensated.

In addition to the respiration gases oxygen and carbon dioxide, the fermentation can be influenced by further parameters within the fermentation room 2, in particular the temperature. In order to provide an opportunity for intervention here, the fermentation room 2 preferably has a heat exchanger 8 in combination with fans, which is fluidly connected to a temperature control system 7, for example a cooler and/or a heater.

The adjusting means and devices 4, 5, 6, 7, 9 suitable for influencing the atmosphere within the fermentation chamber 1 and the CO2 supply 14 are preferably connected to a control device 6 in which, for example, an algorithm for controlling a process is stored which, as a function of measured values and temporal parameters, enables automated control of the atmosphere within the fermentation chamber 2. In particular, the method in accordance with the invention is carried out here, which can be carried out automatically and/or at least partially manually controlled.

This can preferably be achieved by setting the temperature in the fermentation chamber 1 to around +25 to +35°C and measuring how much CO2 develops within about 0.5 to 2 hours in the fermentation room 2 as a result of the fermentation processes or by how much the proportion of O2 in the fermentation room decreases (fermenting coffea fruit absorb O2 and release the same amount of CO2). If this change in concentration Δ[O2] or Δ[CO2] is more than a predetermined value, then the second phase can already be launched with the CO2 fumigation. In the second phase of fermentation, the carbon dioxide concentration in the chamber is slowly increased over time. Subsequently, after the change in the oxygen concentration is lower than a predetermined value, the carbon dioxide concentration inside the chamber is kept constant by dynamically regulating the carbon dioxide fumigation. Finally if no further change of the oxygen concentration is detectable, the CO2 fumigation is halted, the chamber is flushed with fresh air and the temperature is changed to a lower value of preferably +15 to +30°C.

A method according to the invention performable with the above-described fermentation chamber will be described in detail in a preferred embodiment. In this embodiment, the method comprises a plurality of phases.

In the first phase, a comparable state of the individual coffea fruit, based on their ripening stage and their fermentation stage (degree of ripeness and state of the fruit at the beginning of fermentation), is set by adjusting the temperature to +15 to +40°C and measuring the respiration gases CO2 and O2. Then the actual fermentation process takes place in the further phases.

### First phase:

The first phase takes a period of about 12 to 72 hours and comprises the setting of a temperature in a temperature range of +15 to +40 °C and a regular, in particular hourly, measurement of the CO2 production by the coffea fruit and/or the intake of the O2 by the coffea fruit. If the respiration activity i.e. the change of the CO2 production (increase of CO2 concentration Δ[CO2]) and/or the change of the O2 concentration Δ[O2] (decrease of the O2 concentration Δ[O2]) exceeds a predetermined value the next phase is started.

### Second phase:

The second phase takes a period of about 12 to 72 hours during which the temperature is kept stable within a range of +15 to +40°C. In this process, the O2 concentration is measured at regular time intervals, for example in the range of 0.5-2.5 hours, to determine how much O2 is taken up by the coffea fruit, as this allows a conclusion on the fermentation process. The fumigation of the coffea fruit is started with a slowly rising CO2 concentration. This means the fumigation with CO2 is constant and results in a slowly rising CO2 concentration inside the fermentation chamber/room. If the change in the measured O2 concentration rises above a predetermined value, the third phase is started.

### Third phase:

The third phase takes a period of about 12 to 72 hours during which the temperature is kept stable within a range of +15 to +40°C. In this process, the O2 concentration is measured at regular time intervals, for example in the range of 0.5-2.5 hours, to determine how much O2 is taken up by the coffea fruit, as this allows a conclusion on the fermentation process. The fumigation with CO2 is dynamically regulated around a CO2 concentration set point inside the fermentation chamber. The CO2 set point is set to the value the CO2 concentration reached at the end of the second phase, preferably a CO2 concentration of about 50 to 60 Vol% is set. When the O2 measurements fail to detect a further change in the O2 concentration, the final phase is started.

### Final phase:

In the final phase, the temperature, starting from the temperature value of the intermediate phase, is lowered slowly, i.e. in particular over several hours, in particular over 5 to 30 hours, to a value of +10 to +35 ° C. In addition, the CO2 fumigation is stopped and the fermentation chamber is flushed with fresh air. The fermentation chamber is kept at these conditions for about 12 to 72 hours.

Preferably the oxygen concentration in the chamber is kept at an optimal range of 15,0 to 20.9 Vol% during the whole fermentation process during all four above described phases. This is preferably achieved by adding fresh air to the chamber by fresh air supply 13, whenever the O2 concentration in the chamber leaves the optimal range. Measurements of gas concentrations via gas analyser 6 are only done, when the no fresh air is being actively added, as to only measure the influence of the coffea fruit/beans on the atmosphere inside the chamber.

After completion of the final phase, the actual fermentation process is completed. The fermentation room can be opened and does not have to be gas-tight anymore. The goods can either be further processed, i.e. the beans can be removed and roasted and/or dried or further fermented or processed outside of the fermentation chamber under different temperatures according to the desired level of fermentation. The inventive fermentation process results in coffee beans having more mass and a less bitter taste.

### Reference list

- 1: Fermentation chamber with equipment
- 2: Fermentation room
- 3: Transportation means with coffea fruit/ beans
- 4: Temperature sensor
- 5: Adjusting means for a gas metering pump
- 6: Control device and gas analyser
- 7: Temperature control system
- 8: Heat exchangers and gas / liquid medium for temperature control (cooling / heating) with a ventilation system
- 9: Lung
- 10: Pressure flap
- 11: CA-Gate
- 12: Flexible air foreclosure system
- 13: Oxygen aeration device with fan / fresh air supply
- 14: Carbon dioxide gas cylinder

## Claims

1. A chamber for fermenting, transporting and/or storing whole coffea fruit or coffee beans, wherein the container comprises a gas-tight fermentation room (2) or consists of such a space in which the coffea fruit or coffee beans to be fermented are arranged, and a unit for monitoring and controlling respiration gases in the interior of the fermentation chamber (2), so that during fermentation, transport and/or storage of the coffea fruit or coffee beans their respiration activity can be measured and controlled.

2. The chamber of claim 1, wherein the respiration gases comprise at least carbon dioxide and oxygen.

3. The chamber of one of the preceding claims, wherein the unit for monitoring and controlling respiration gases is configured to vary a carbon dioxide concentration.

4. The chamber of claim 3, wherein the carbon dioxide concentration is varied in the range of 20 to 90 Vol%.

5. The chamber of one of the claims 3 or 4, wherein the carbon dioxide concentration is varied as a function of an oxygen concentration.

6. The chamber of one of the preceding claims, wherein the monitoring and control unit comprises a means (4, 5, 6) for measuring a CO2 concentration, an O2 concentration and/or a temperature within the fermentation room (2) as well as corresponding means (6) for evaluating the measured values obtained and a means (7, 8, 13, 14) connected to at least one means (6) for evaluation, for controlling and regulating an atmosphere within the fermentation chamber (2) of the chamber.

7. The chamber of one of the preceding claims, wherein the chamber further comprises a means for regulating a temperature (7) in the fermentation room (2).

8. The chamber of one of the preceding claims, wherein a means for monitoring a state of fermentation, in particular a camera and / or a sensor for determining a fermentation stage, is arranged inside the fermentation room (2).

9. The chamber of one of the preceding claims, wherein the fermentation room (2) has a means (9, 10) for regulating a pressure, in particular a pressure relief valve.

10. The chamber of one of the preceding claims, wherein the chamber is designed as a reversibly lockable container.

11. A lorry, ship or freight train having a chamber of one of the preceding claims.

12. A method for fermenting whole coffea fruit or coffee beans, wherein the coffea fruit to be fermented are arranged inside a chamber of one of the claims 1 to 10.

13. The method of claim 12, wherein the fermentation comprises several fermentation phases **characterized by** their change in gas concentrations, wherein in a first phase an increase and in a final phase no increase of a CO2 concentration in the fermentation room (2) is measurable.

14. The method of claim 13, wherein in a second phase a fumigation with CO2 takes place as soon as a predetermined increase in the CO2 concentration and/or a predetermined decrease in the O2 concentration is measured in the first phase.

15. The method of one of the claims 12 to 14, wherein the gas and coffea fruit or coffee bean temperatures inside the fermentation room (2) are measured and regulated continuously or at regular intervals.
